# EUROPEAN PATENT SPECIFICATION

(11) **EP 2 815 717 B1**
(45) Date of publication and mention of the grant of the patent: **07.08.2019**
(21) Application number: 14172940.0
(22) Date of filing: 18.06.2014
(51) Int. Cl.: A61C 8/00, A61C 13/10

(54) **DENTAL FIXATION SYSTEM**
ZAHNFIXIERUNGSSYSTEM
SYSTÈME DE FIXATION DENTAIRE

(30) Priority: 21.06.2013 ES 201330941
(43) Date of publication of application: 24.12.2014
(73) Proprietor: Createch Medical, S.L., 20850 Mendaro (Guipúzcoa) (ES)
(72) Inventor: Urzainqui Beristain, Ruben, 20600 EIBAR (Guipuzcoa) (ES); Moreno Lucendo, Angel, 20600 EIBAR (Guipúzcoa) (ES); Mendez Robles, Jose Maria, 20600 EIBAR (Guipúzcoa) (ES); Egurbide Aristondo, Xabier, 20200 MOTRICO (Guipúzcoa) (ES); Gimeno Eguia, Julen, 20600 EIBAR (Guipúzcoa) (ES); Gomez Picaza, Mikel, 48940 LEKEITIO (Vizcaya) (ES); Urzainqui Beristain, Anchoka, 20159 ELGOIBAR (Guipúzcoa) (ES)
(74) Representative: Ungria López, Javier

(56) References cited:
- DE-A1-102006 036 715
- US-A- 6 048 203
- US-A1- 2002 177 106
- US-A1- 2008 153 063
- US-A1- 2009 117 520

## Description

### OBJECT OF THE INVENTION

The present invention relates to a dental fixation system, which makes it possible to resolve great divergences in implants and improves fixation between the prosthesis and the implant.

It may particularly be applied within the field of the dental implant industry.

### TECHNICAL PROBLEM TO BE RESOLVED AND BACKGROUND OF THE INVENTION

In recent years, fixation elements have been used very frequently in the field of supported-implant dental prostheses, for prosthesis on implants. They are used to retain the prosthesis in such a way that they can be removed, i.e., patients can remove them, in order to perform a hygiene operation, for example.

The implant is fastened to the patient's bone by means of osteointegration, acting as an artificial support, upon which the mechanism that integrates the dental prosthesis to be inserted is fastened.

Common fixation elements are composed of three pieces: one threaded male component, one female component and a retainer element.

In the current state of the art, there are different types of fixation element, with various retainer forms, where the most common are as follows:
- Spherical form: metal male fixation component of the ball variety and a semi-spherical female component made of Teflon.
- Cylindrical form: metal male fixation component of the cylindrical variety and female cylindrical component of the "loop" variety.
- Toroidal form: metal male fixation element of the toroid variety and female element with the same form, of the "locator" variety.

However, one problem frequently encountered with current fixation elements is that they do not resolve situations in which adjacent implants have large divergences between them, i.e. situations in which there are large angles between the axes of adjacent implants.

Document US2002/177106 describes an implant-supported dental prosthesis which has in its main body several basal recesses in which in each case a conical cap is embedded in self-curing plastic. Each conical cap sits on a conical peg of a construction post, which is inserted in a conical hole of an enossal implant. Exclusively prefabricated components are used for the production of the dental prosthesis. The embedding of the conical caps in the main body of the dental prosthesis (takes place in a single session in the dental practice, after which the dental prosthesis is completed.

Furthermore, when the implant axis is directed towards the external portion of the prosthesis, usually towards the vestibular or external side of the mouth, the fixation element comes out of the prosthesis limits, thus invading the aesthetic portion and becoming visible.

Another one of the problems posed by current fixation elements is that they do not make the prosthesis very stable and sometimes fail to retain the same.

The present invention will solve these problems left un-resolved in the current state of the art.

### DESCRIPTION OF THE INVENTION

The present invention describes a dental fixation system according to claim 1 and upon which a dental prosthesis is fastened and which is fastened to an existing implant. Said fixation system comprises a self-threading screw, a male component and a female component. The self-threading screw fastens the male component to the implant, the female element is fastened to the male component and the prosthesis is fastened to the female component.

The male component has a primary area, which is introduced into the gum and a secondary area, which is conical in geometry and protrudes from the gum.

The female component has an inner cavity, which is conical in geometry and is adjusted to the conical geometry of the male component, in such a way that the female component is joined to the male component, by means of a conical support.

The male component comprises a cavity in the base with an inverted frustoconical geometry, the female component comprising an extension of the cavity in the lesser base of the inner cavity, thus forming a rung with the conical geometry of said inner cavity. In addition, it comprises a retainer element, which is mechanically fastened inside the female component, in order to mechanically fasten the assembly formed by the prosthesis and the female component in the male component cavity.

The female and male components may be standard or personalised for each situation in any of the variations thereof. Should they be personalized, as mentioned, precision will be greater, although cost and supply time will also rise. Should they be standard, the male and female components perform standard movements or form standard angles. There is usually stock in dental clinics and the cost is much lower. This option is used when the actual divergence does not differ so greatly from that of the standard models and the difference can be dealt with.

In all cases, in order to better fasten the dental prosthesis, the female component has a knurled external surface or similar.

### BRIEF DESCRIPTION OF THE DRAWINGS

In order to complete the present description of the invention, with the aim of facilitating a better understanding of the characteristics thereof, in accordance with a number of preferred exemplary embodiments of the same, a set of drawings is attached, wherein the following figures are represented by way of a non-limiting illustration:
- Figure 1 is a section view of a fixation system of the present invention in the option of fixing by means of the retainer element, with all the components thereof being represented, mounted to an implant.
- Figure 2 is a section view of two fixation systems, wherein two possible situations of the implant axes and the fixation elements have been represented, also including the gum and bone area, wherein the fixation system illustrated on the lefthand side corresponds to the present invention, whereas the fixation system illustrated on the right-hand side corresponds to an embodiment which does not form part of the present invention.
- Figure 3 is a section view of a system of the present invention with a common axis, moved relative to the implant (1) axis.
- Figure 4 is a section view of a fixation system of the present invention with a common axis, rotated and moved relative to the implant (1) axis.
- Figure 5 is a section view of a fixation element with a common axis, rotated and moved relative to the implant (1) axis in the option of fixing by means of friction.
- Figure 6 is a section view of a fixation element with a common axis, rotated and moved relative to the implant (1) axis in the option of fixing by means of suction.
- Figure 7 is a section view of a fixation element with a self-threading male component, with the same common axis as the implant (1) axis.

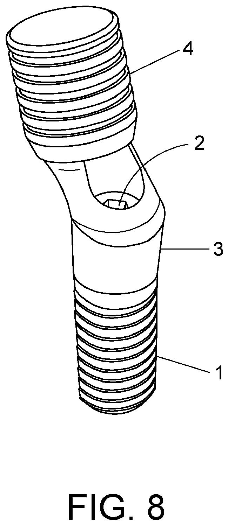

- Figure 8 is a perspective view of a complete fixation system of the present invention, mounted to an implant, with all the components thereof.

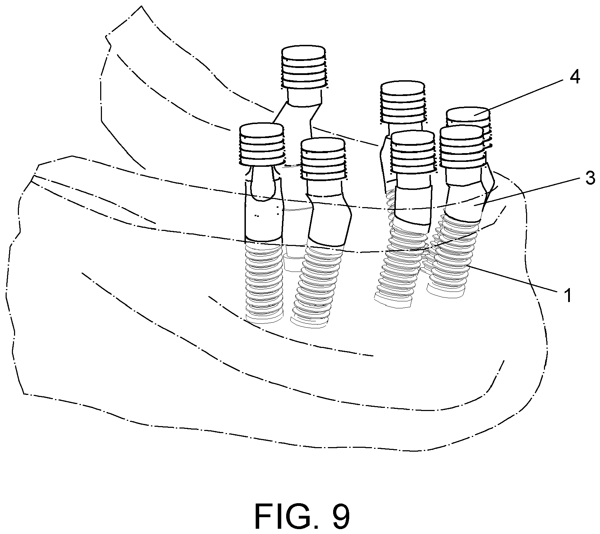

- Figure 9 represents an assembly of implants divergent on a lower jaw with the male components of a plurality of fixation systems of the present invention leading to a common axis.

Below is a list of references employed in the figures:
1. Implant.
2. Self-threading screw.
3. Male component.
4. Female component.
5. Retainer element.
6. Bone.
7. Gum.

### DESCRIPTION OF A PREFERRED EMBODIMENT OF THE INVENTION

The object of the present invention is based on a dental fixation system, which makes it possible to resolve large divergences between a patient's implants and which improves the fixation between the prosthesis and the implant, by means of the elastic deformation of a retainer element, using the friction generated by an adjusted join, by means of the vacuum that creates a join with a loose space, which gives rise to a suction effect or by means of a combination of these methods.

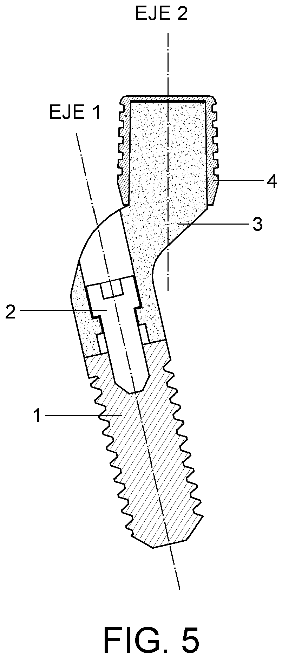

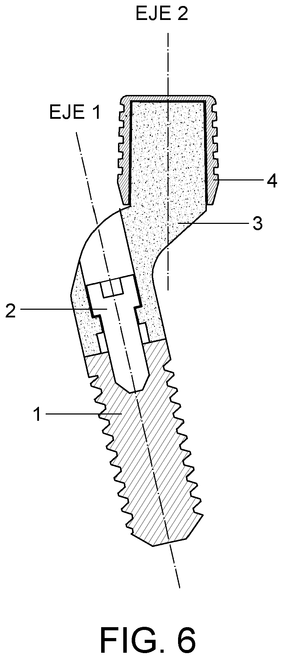

In the figures, the fastening method that uses a retainer element (5) has mainly been represented, since it is the most complete. In Figures 5 and 6, the options of fixing by means of friction and suction are represented, respectively, wherein the retainer element (5) has been removed.

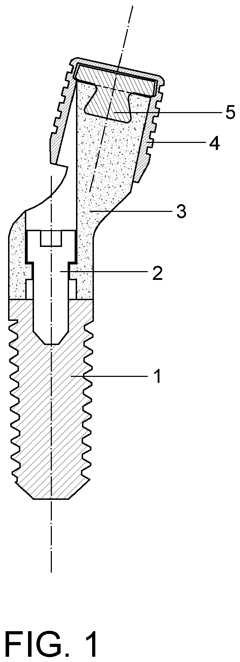

According to the representation given in Figure 1, the fixation element is composed of four pieces: a self-threading screw (2), a male component (3), a female component (4) and a retainer element (5).

As can be seen in Figure 1, the fixation element is attached to an implant (1) via the self-threading screw (2), which is housed in the male component (3).

The retainer element (5) is introduced into the cavity of the female component (4) and is retained in the broadening of the female component (4) in the lesser base of the conical geometry thereof. The assembly formed by the female component (4) and the retainer element (5) constitute the pieces that are fastened to the dental prosthesis to be inserted.

The dental prosthesis, with the female component (4) and the retainer element (5) already inserted, are thus fixed to the male component (3), which was previously fastened to the implant (1) by means of the self-threading screw (2), in such a way that the dental prosthesis is firmly joined to the implant (1).

In the event of fastening by means of friction or suction, where there is no retainer element (5), the operation would be carried out in the same way, the difference being that the female component (4) with the prosthesis already mounted would simply be joined by sliding it onto the male component (3), thus producing fixation by means of friction or suction.

The male component (3) is divided into two clearly differentiated areas:
- a primary area or area that crosses the gum (7) and is hidden therein, and
- a secondary area or fixation area that protrudes from the gum (7).

The primary area depends on the morphology of the gum (7) and faces the same direction as the implant (1). It is positioned on the implant (1), seeking the most favourable location, so that the second area of the male component (3) faces the optimal direction.

The secondary area faces the same direction as the female component (4) and therefore, the same direction as the prosthesis mounted on said female component (4). The secondary area of the male component (3) has an external form, which is conical in geometry, in such a way that it rests on the gum (7) and acts as support for the female component (4) and thereby, for the prosthesis.

In one of the embodiments for fastening by means of retention, the male component (3) also has a cavity with inverted frustoconical geometry in the base of the secondary area, which would serve as a mechanical retention upon housing the retainer element (5), which is fixed in this cavity by means of elastic deformation.

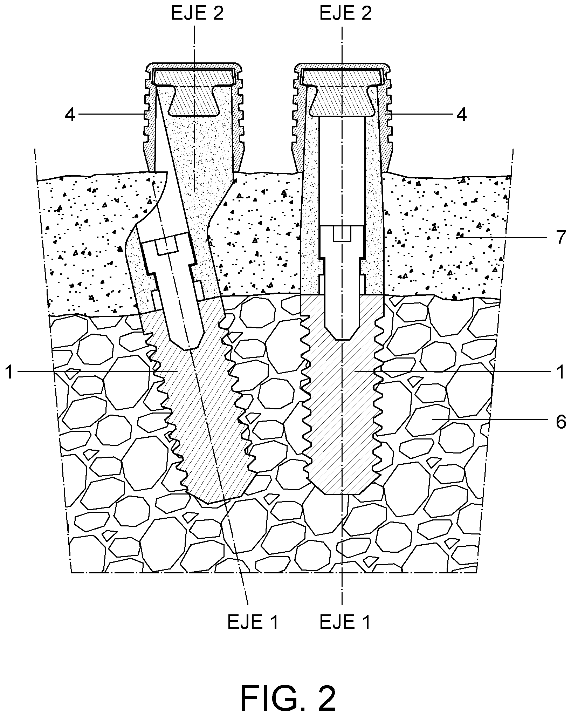

In general, the direction of the implants (1) is divergent, according to the representation shown in Figure 2, which is problematic when it comes to looking for an axis common to the fixation elements, the direction in which the dental prosthesis or dental prostheses are inserted.

In order to resolve this divergence, the situation of having two axes in the same fixation element should be considered. These axes are represented in Figure 2 as axis 1 and axis 2. One of the axes, named axis 1, therefore represents the direction of the axis in the primary area of the male fixing component (3) of the fixation element, which is the same as that of the implant itself (1). The other axis, named axis 2, represents the direction of the axis in the secondary area of the male fixing component (3) of the fixation component, which is the same direction as that of the female component (4) in the prosthesis, which therefore corresponds to the insertion axis of the prosthesis in the fixation element. In this way, there may be implants (1) in different directions but with the fixation elements in one single direction. The present invention describes how to place the fixation elements with a direction in which the axes of the secondary areas of the male components (3) are parallel.

There are two variations in the fixation elements existing in the current state of the art:
- Axis 1 and 2 coincide (straight fixation element), which corresponds to an embodiment which does not form part of the present invention.
- Axis 1 and 2 are rotated relative to one another, the value of the angle formed between them being standard (angled fixation element).

The problem lies in that, depending on the divergence of the implants (1), the use of current fixation elements is not enough to guarantee a common axis 2 for all the fixation elements and thus guarantee insertion of the prosthesis. It is important to bear in mind that if the prosthesis is one single dental piece, it needs an insertion direction in the fixation element in such a way that it does not interfere with adjacent dental pieces and if the prosthesis consists of various dental pieces in one single personalized structure, the direction of all the fixation elements should be the same, so that the prosthesis may be inserted correctly.

In addition to including the two variations of current fixation elements mentioned above, the fixation system of the present invention includes two new variations.

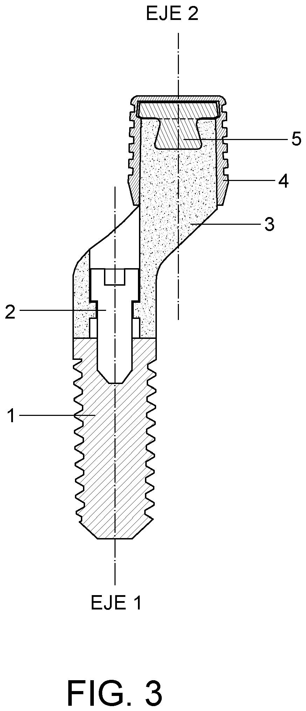

In the first, axis 2 is moved relative to axis 1, as shown in Figure 3.

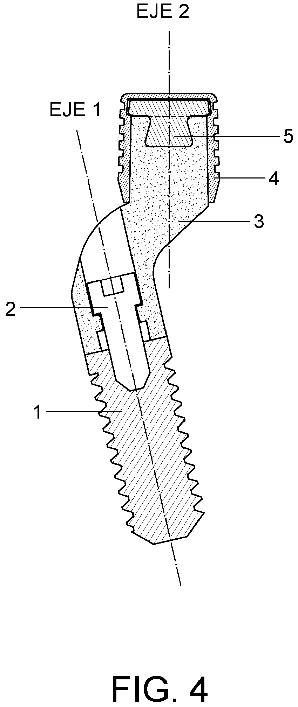

In the second, axis 2 is moved and rotated relative to axis 1, as shown in Figure 4.

Likewise, these four variations of the fixation element may be standard or personalised for each situation.

Should it be a standard fixation element, it has a rotation between Axis 1 and the Axis 2, which is fastened beforehand. Owing to the two new axial movements (movement and rotation) of the present invention, it is possible to offer standard fixation elements with simultaneous movement and rotational values between Axis 1 and Axis 2, which gives rise to better correction of implant (1) divergence. This cannot be carried out by current fixation elements.

On the other hand, should the fixation element be personalised, the method for manufacturing the fixation elements is as follows:
1. A model of the patient's implants (1) is made, thus obtaining the direction of the same.
2. The common axis 2 for said implants (1) is calculated by means of employing a computer program.
3. The fitting elements are designed with their necessary rotation degrees and movement, in order for them to all have the same common axis 2.

Logically, whereby a personalised fitting element is concerned, the optimal solution would be obtained.

As far as the female component (4) is concerned, it is a piece with a cavity with conical geometry, with a cone taper equal or similar to that of the external wall of the secondary portion of the male component (3) upon which it is supported.

The female component (4) has a coarse surface on the external wall, of the knurled variety, in such a way that it may be fixed more effectively to the dental prosthesis.

Likewise, in one embodiment wherein the retainer element (5) is used, the female component (4) broadens in the lesser base of its conical geometry, where the retainer element (5) is inserted.

This retainer element (5) is made of elastic material, which makes deformation possible in order for it to be introduced into the male component cavity (3), thus generating retention between the male component (3) and the female component (4). It is preferably disc shaped in geometry, with an inverted conical frustum protruding from the same. The disc is fitted into the female component (4) as mentioned above and the frustum is inserted, by means of elastic deformation, into a complementary geometry made in the base of the male component (3).

Both the male component (3) and the female component (4), in the event of multiple implants, may be made standard, personalised or using a combination thereof.

Another embodiment constitutes substituting the individual female components (4) with a personalised structure which has, in its base, so many housings with the geometry of the standard female component (4) as male components (3) are built inside the patient's mouth.

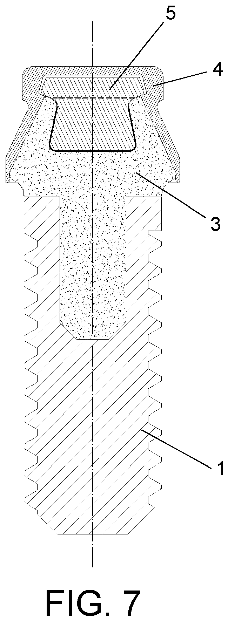

One particular embodiment which does not form part of the present invention is that said fixation element, in which the axis of the primary area of the male component (3) or implant axis (1) and the secondary area of the male component (3) or prosthesis axis, coincide, as shown in Figure 7. This fixation element would be employed in situations in which the implant axis (1) does not diverge greatly from the rest of the implants (1).

In this case, the self-threaded screw (2) is incorporated into the male component (3), thus forming one single piece and the male component (3) itself is threaded to the implant (1). The secondary area of the male component (3) is conical in geometry, with a slope that may reach up to 45 degrees, in such a way that the female component (4) is inserted into the male component (3), it not being necessary for the implant (1) axis to coincide with the axis of the prosthesis, given the advantages of the conical geometry. As a complementary method for helping the retention created by the inner geometry of the male component (3), where the retainer element (5) is inserted, the female component (4) has a gripping element on the final free stretch of the conical geometry on the inner portion thereof, which complements a recess arranged on the greater base of the conical geometry of the male component (3), where it is fixed. In this particular case, the lesser base of the conical geometry of the external surface of the female component (4) ends with a disc shaped geometry with a larger diameter than that of the said greater base, which follows the geometry of the retainer element (5) it holds, thus forming a recess in the join with the conical geometry, in such a way that it ensures the prosthesis is retained to the female component (4).

As mentioned above, in addition to retaining the female component (4) in the male component (2) by means of the retainer element (5), the possibility of retention being carried out by means of friction or suction also exists.

Figure 5 represents the case of retaining by means of friction, which does not form part of the present invention. In this case, retention is produced by having the external conical surface of the secondary area of the male component (3) and the inner conical surface of the female component (4) which is adjusted to the same and mounted very tightly.

Figure 6 represents the case of retention by means of suction, which does not form part of the present invention. This case is very similar to the latter. The difference lies in that the adjustment between the external conical surface of the secondary area of the male component (3) and the inner conical surface of the female component (4) adjusted therein, has a loose space in which the saliva interface existing between the two elements produces the suction effect by means of the vacuum created. This effect is similar to that produced when two pieces of wet glass are joined together. The water interface produced in the join creates a suction effect between the two glasses, thus giving rise to adherence.

In both cases described, the retainer element (5) described above is not necessary, the male (3) and female (4) components being joined together as a result of the described friction or suction effects.

In any case, any of the three retainer options may be employed individually or together.

Ultimately, there are four advantages that differentiate the above embodiments from the current state of the art:
1. It is a fixation element comprising or combining the three following methods in order to hold the prosthesis:
   - The fixation element has a retainer element (5) made of elastic material, which fixes the male (3) and female (4) components.
   - The fixation element has a conical support between the male (3) and female (4) components, which stabilises the prosthesis and generates retention between both components by means of the friction generated.
   - Since they are flat, conical and very adjusted surfaces, this gives rise to a saliva interface, which provides the fixation element with suction or vacuum properties that generate retention.

   More stable, better retained prostheses than those in the current state of the art are thus achieved.
2. The design of the male component (3) facilitates a primary area and secondary area, the axes of which do not coincide, thus solving the most extreme divergences in the implants (1).
3. It is a unitary fixation element, which may consist of a standard or personalised female component (4) and standard or personalised male component (3) for each case, it being possible to obtain any of the possible combinations of personalized and standard components (3, 4).
   The advantage of the personalised component (3, 4) over the standard component is that it may be better adapted to the divergence of the implants (1) and also to the morphology of the gum (7), although the flexibility it brings in being able to fasten the male component (3) to the implant (1) by means of the self-threading screw (2) in the most convenient position, means that the standard female component (4) is usually enough.
   The advantage of the standard component (3, 4), in addition to the cost thereof, since it does not have to be personalised, is that it is immediately available. Stock can be found in the clinic and used immediately, not waiting for the manufacturing process. Cases that may be resolved using standard components are very convenient for both the doctor and the patient.
4. The possibility of moving the axes of the male component (3), rather than tilting the implants (1) by means of rotation and transfer, as shown in the new embodiments represented in Figures 3 and 4, makes it possible to give the assembly a common axis, which favours insertion of the prosthesis.

The person skilled in the art will understand that the examples given refer to possible embodiments, although other general embodiments are possible. In general, the cases represented in this invention may have any geometry, provided that this does not affect the function described.

As a result, the scope of the invention is defined by the following claims.

## Claims

1. Dental fixation system, upon which a dental prosthesis is fastenable to an existing implant (1), said fixation system comprising:
- a self-threading screw (2),
- a male component (3), and
- a female component (4),
- a retainer element (5),
wherein:
- the self-threading screw (2) is configured to fasten the male component (3) to the implant (1),
- the male component (3) comprises a primary area configured to be located inside the gum (7) and a secondary area, with a conical geometry configured to protrude from the gum (7),
- the female component (4) comprises an inner cavity with a conical geometry that fits the conical geometry of the male component (3), and
- the prosthesis being fastenable to the female component (4),
in such a way that the female component (4) can be joined to the male component (3) by means of a conical support,
**characterised in that**:
- the male component (3) comprises a cavity located in the smaller base of the secondary area, said cavity in the male component having an inverted frustoconical geometry,
- the smaller base of the conical geometry of the inner cavity of the female component (4) comprises an extension of the inner cavity forming a groove within the conical geometry of said inner cavity,
- the retainer element (5) is made of an elastic material and comprises an inverted conical frustrum that protrudes from a disc shape, the disc shape being configured to be retained in the groove of the female component (4) and the inverted conical frustrum being configured to be inserted into a complementary geometry in the base of the male component (3), such that the fastening of the female component on the male component is performed by retention,
- the primary area of the male component (3) has an axis with the same direction as an axis of the implant (1), to which the male component (3) is fastened,
- the secondary area of the male component (3) has an axis with the same direction as an axis of the female component (4) and the same direction as an axis of the prosthesis fastened to it,
in such a way that the axis of the primary area and the axis of the secondary area do not coincide.

2. Dental fixation system according to claim 1, **characterised in that** the female component (4) and male component (3) are standard or specifically designed for each situation, in any of the variations thereof.

3. Dental fixation system according to any of the previous claims, **characterised in that** the female component (4) has a knurled external surface or similar, in such a way that the fastening of the dental prosthesis is improved.

## Patentansprüche

1. Dental-Fixiersystem, an dem eine Dental-Prothese auf einem vorhandenen Implantat (1) befestigt werden kann, wobei das Fixiersystem umfasst:
- eine selbstschneidende Schraube (2),
- eine Einführ-Komponente (3), sowie
- eine Aufnahme-Komponente (4),
- ein Halte-Element (5),
wobei:
- die selbstschneidende Schraube (2) zum Befestigen der Einführ-Komponente (3) an dem Implantat (1) eingerichtet ist,
- die Einführ-Komponente (3) einen primären Bereich, der zum Anordnen im Inneren des Zahnfleisches (7) eingerichtet ist, sowie einen sekundären Bereich mit einer konischen Form umfasst, die so eingerichtet ist, dass sie von dem Zahnfleisch (7) vorsteht,
- die Aufnahme-Komponente (4) einen inneren Hohlraum mit einer konischen Form umfasst, die der konischen Form der Einführ-Komponente (3) entspricht, und
- die Prothese an der Aufnahme-Komponente (4) so befestigt werden kann,
dass die Aufnahme-Komponente (4) über einen konischen Träger mit der Einführ-Komponente (3) verbunden werden kann,
**dadurch gekennzeichnet, dass:**
- die Einführ-Komponente (3) einen Hohlraum umfasst, der sich in dem kleineren unteren Teil des sekundären Bereichs befindet, wobei der Hohlraum in der Einführ-Komponente umgekehrt kegelstumpfförmig ist,
- der kleinere untere Teil der konischen Form des inneren Hohlraums der Aufnahme-Komponente (4) eine Verlängerung des inneren Hohlraums umfasst, die eine Einkerbung im Inneren der konischen Form des inneren Hohlraums bildet,
- das Halte-Element (5) aus einem elastischen Material besteht und einen umgekehrten Kegelstumpf umfasst, der von einer Scheibenform vorsteht, wobei die Scheibenform so eingerichtet ist, dass sie in der Einkerbung der Aufnahme-Komponente (4) gehalten wird, und der umgekehrte Kegelstumpf so eingerichtet ist, dass er in eine komplementäre Form in dem unteren Teil der Einführ-Komponente (3) eingeführt wird, so dass das Befestigen der Aufnahme-Komponente an der Einführ-Komponente durch Zurückhalten durchgeführt wird,
- der primäre Bereich der Einführ-Komponente (3) eine Achse mit der gleichen Richtung wie der einer Achse des Implantats (1) hat, an dem die Einführ-Komponente (3) befestigt wird,
- der sekundäre Bereich der Einführ-Komponente (3) eine Achse mit der gleichen Richtung wie der einer Achse der Aufnahme-Komponente (4) und der gleichen Richtung wie der der daran befestigten Prothese hat,
so dass sich die Achse des primären Bereiches und die Achse des sekundären Bereiches nicht decken.

2. Dental-Fixiersystem nach Anspruch 1, **dadurch gekennzeichnet, dass** die Aufnahme-Komponente (4) und die Einführ-Komponente (3) standardgemäße oder speziell für jede Situation konstruierte Elemente in jeder der Varianten derselben sind.

3. Dental-Fixiersystem nach einem der vorangehenden Ansprüche, **dadurch gekennzeichnet, dass** die Aufnahme-Komponente (4) eine gerändelte Außenfläche oder dergleichen hat, so dass das Befestigen der Dental-Prothese erleichtert wird.

## Revendications

1. Système de fixation dentaire, par le biais duquel une prothèse dentaire peut être fixée à un implant (1) existant, ledit système de fixation comprenant :
- une vis autotaraudeuse (2),
- un composant mâle (3), et
- un composant femelle (4),
- un élément de retenue (5),
où :
- la vis autotaraudeuse (2) est configurée pour fixer le composant mâle (3) à l'implant (1),
- le composant mâle (3) comprend une zone primaire configurée pour être située à l'intérieur de la gencive (7) et une zone secondaire, avec une géométrie conique configurée pour faire saillie de la gencive (7),
- le composant femelle (4) comprend une cavité interne avec une géométrie conique qui s'adapte à la géométrie conique du composant mâle (3), et
- la prothèse pouvant être fixée au composant femelle (4),
de telle manière que le composant femelle (4) peut être joint au composant mâle (3) au moyen d'un support conique,
**caractérisé en ce que** :
- le composant mâle (3) comprend une cavité située dans la plus petite base de la zone secondaire, ladite cavité dans le composant mâle ayant une géométrie tronconique inversée,
- la plus petite base de la géométrie conique de la cavité interne du composant femelle (4) comprend une extension de la cavité interne formant une rainure dans la géométrie conique de ladite cavité interne,
- l'élément de retenue (5) est fait d'une matière élastique et comprend un tronc de cône inversé qui fait saillie d'une forme de disque, la forme de disque étant configurée pour être retenue dans la rainure du composant femelle (4) et le tronc de cône inversé étant configuré pour être inséré dans une géométrie complémentaire dans la base du composant mâle (3), de sorte que la fixation du composant femelle sur le composant mâle est réalisée par rétention,
- la zone primaire du composant mâle (3) a un axe avec la même direction qu'un axe de l'implant (1), auquel le composant mâle (3) est fixé,
- la zone secondaire du composant mâle (3) a un axe avec la même direction qu'un axe du composant femelle (4) et la même direction qu'un axe de la prothèse fixée à lui,
de telle manière que l'axe de la zone primaire et l'axe de la zone secondaire ne coïncident pas.

2. Système de fixation dentaire selon la revendication 1, **caractérisé en ce que** le composant femelle (4) et le composant mâle (3) sont standard ou conçus spécifiquement pour chaque situation, dans l'une quelconque de leurs variantes.

3. Système de fixation dentaire selon l'une quelconque des revendications précédentes, **caractérisé en ce que** le composant femelle (4) a une surface externe moletée ou similaire, de telle manière que la fixation de la prothèse dentaire est améliorée.
